# EUROPEAN PATENT SPECIFICATION

(11) **EP 3 107 317 B1**
(45) Date of publication and mention of the grant of the patent: **21.11.2018**
(21) Application number: 15172354.1
(22) Date of filing: 16.06.2015
(51) Int. Cl.: H04W 4/029

(54) **User activity random indexing predictor for mobile context awareness**
DIREKTINDEXIERUNGSPRÄDIKTOR DER BENUTZERAKTIVITÄT FÜR MOBILKONTEXTBEWUSSTSEIN
PRÉDICTEUR D'INDEXATION ALÉATOIRE D'ACTIVITÉS D'UN UTILISATEUR POUR LA RECONNAISSANCE D'UN CONTEXTE MOBILE

(43) Date of publication of application: 21.12.2016
(73) Proprietor: Huawei Technologies Co., Ltd., Longgang District Shenzhen, Guangdong 518129 (CN)
(72) Inventor: SALMINEN, Karoliina, 16440 Kista (SE); TERHO, Mikko, 16440 Kista (SE)
(74) Representative: Gill Jennings & Every LLP

(56) References cited:
- US-A1- 2003 105 589
- US-A1- 2012 135 751
- US-A1- 2012 265 978

## Description

### TECHNICAL FIELD

The aspects of the present disclosure relate generally to mobile communication devices and in particular to context awareness in a mobile communication device.

### BACKGROUND

In recent years wireless devices have evolved from basic mobile phones providing simple voice and texting functionality into powerful mobile computing devices, also referred to herein as mobile devices or just devices. These can include for example, smart phones, tablets or phablets. These mobile devices provide a wide range of powerful software applications in different areas including communications, internet, entertainment, banking, and personal fitness.

Conventional mobile operating devices generally present only pre-defined choices to the user. These devices do not learn from the actions and choices made by the user and the device does not predict what the user is going to do next. The operating systems of such devices pragmatically execute the actions users ask them to perform and the device itself does not make any choices, or present other possible choices to the user.

Predictive editing is common in some mobile devices. In some cases, an action prediction is used, such as for example, auto filling a web page uniform resource locater (URL) or completing text entries. For example, as a user types the characters, potential URLs for web pages that can be predicted from the typed characters are presented. However, there is no context intelligence as to when and where a particular web page is or may be important. As an example, a bus time table is needed in specific situations, such as when the person is at or heading to the bus stop. At other times, it may not be necessary to present the bus time table to the user. Instead of presenting the user with all possible choices when looking for information, it would be advantageous to be able to present only the choices that are relevant for a current situation or context.

Applications typically present static choices, their user interface elements are not context aware, and the applications do not self-adapt. For example, a user viewing an image on a mobile computing device and desiring to share the image may be presented with static choices for different social networking options such as Facebook™ or Flickr™ (in other words a pre-defined model), which may or may not be relevant for the particular situation or circumstances. It would be advantageous to reduce the amount of information that may be presented to the user via the mobile device in certain situations.

Thus, there is a need for improved apparatus and methods for enabling context awareness and prediction in mobile communication devices.

US 2012/0265978 relates to system and method for context aware dynamic ribbon. US 2012/0135751 relates to use of location tagging in data communications. US 2003/0105589 relates to a media agent to autonomously collect semantic multimedia data text descriptions on behalf of a user whenever and wherever the user accesses media content.

### SUMMARY

It is an object of the present invention to provide an apparatus and methods to dynamically present a most likely next action on a mobile communication device to a user. This object is solved by the subject matter of the independent claims. Further advantageous modifications can be found in the dependent claims.

According to a first aspect of the present invention, the above and further objects and advantages are obtained by an apparatus for predicting a next user action. The apparatus includes a processor configured to detect a user action, detect at least one of a time and a location of the user action, translate the user action and at least one of the time of the user action and the location of the user action into a set of words, calculate a semantic similarity between the set of words and at least one previously generated set of words, and determine one or more predicted actions of the user based on a closest semantic similarity between the set of words and the at least one previously generated set of words. By monitoring multiple parameters, the actions of a user in certain contexts or situations can be learned. The learned actions, in combination with current context information can be used to form a basis for providing a prediction of a next action.

According to the first aspect, the processor is also configured to convert a word in the set of words into an index vector. This is advantageous because there is an index vector for each word and a row in the random index matrix for each word. The predicted actions that are presented are determined by comparing the vectors in the random index matrix to the newly formed vector. The words in the rows of the matrix corresponding to similar vectors form the basis for the predicted actions.

According to the first aspect, the processor is also configured to form a union of index vectors and store the union of index vectors in a random index matrix. This is advantageous because the union of the vectors is a sparse representation of the event, the user action and sensor data, and is stored in the random index matrix.

In a first possible implementation form of the apparatus according to the first aspect a sensor is configured to detect the user action. This enables the user action and context information to be developed locally, relative to the apparatus, which forms the basis for the parameters that are used in the predictions.

In a second possible implementation form of the apparatus according to the first aspect as such or the first possible implementation form of the apparatus according to the first aspect, the processor is configured to translate sensor readings from the sensor into words using an activity recognition algorithm. Translating the raw data from the sensor into a machine understandable language advantageously enables the use of text based classification and analysis of the context information.

In a third possible implementation form of the apparatus according to the first aspect as such or to any of the preceding possible implementations forms of the apparatus according to the first aspect, the processor is configured to process the set of words using a prediction algorithm. The aspects of the disclosed embodiments translate the sets of words into vectors. Similar relationships between different vectors can be used to form the basis for predicted actions.

In a fourth possible implementation form of the apparatus according to the first aspect as such or to any of the preceding possible implementations forms of the apparatus according to the first aspect, the prediction algorithm is a random index algorithm. The random index algorithm provides a reliable text classification system and enables identifying similarities between a current set of words and previously generated sets of words.

Random index algorithms have been used for natural language processing and text classification. The paper by Magnus Sahlgren entitled "The Word-Space Model: Using distributional analysis to represent syntagmatic and paradigmatic relation between words in high-dimensional vector spaces" describes the use of Random Indexing in text classification. However, Sahlgren merely describes text classification. There is no teaching related to predicting user actions on or with a mobile device. Use of a Random Indexing Algorithm in accordance with the aspects of the disclosed embodiments enables prediction a next user action based on text analysis without the need for a programmer to explicitly program the activity model.

In a fifth possible implementation form of the apparatus according to the first aspect as such or to any of the preceding possible implementations forms of the apparatus according to the first aspect, the processor is configured to translate the set of words into a machine readable format. This is advantageous as the system is agnostic as to what it describes and allows for the processing of the words or parameters in a reliable manner.

In a sixth possible implementation form of the apparatus according to the first aspect as such or to any of the preceding possible implementations forms of the apparatus according to the first aspect, the processor is configured to translate the set of words into a W3C Uniform Resource Identifier format. This provides a readily understandable encoding and enables determining whether a label in a prediction phrase is a URL or some other system word.

In a seventh possible implementation form of the apparatus according to the first aspect as such or to any of the preceding possible implementations forms of the apparatus according to the first aspect, the processor is configured to present the one or more predicted actions on a user interface of the apparatus, detect a selection of one of the one or more predicted actions and execute an action of the apparatus associated with the detected selection. This advantageously enables the selection and performance of a predicted action and allows the system to learn from a user selection of a presented action. When a selection of a predicted action is detected, this selection can be stored together with the current context information in the previously generated set of words. These associations help refine the next predicted action. Hence, an apparatus is provided which can learn from actions taken by a user to determine a next predicted action. This is achieved by monitoring, among other things, the actions of the user with the mobile communication device. The monitoring of the actions of the user supports context awareness in the mobile communication device.

In a eighth possible implementation form of the seventh possible implementation form of the apparatus according to the first aspect as such, the processor is configured to translate the selected prediction into an intent that performs the selected prediction on the apparatus. This advantageously enables a selection of a prediction to be translated to an action. When a predicted action is selected, such as by "clicking", the word can be translated into the actual action in the operating system.

In an ninth possible implementation form of the seventh or eighth possible implementation forms of the apparatus according to the first aspect as such the processor is configured to generate an action based on the detection of the selection of the one or more predicted actions and store the action together with the set of words in the previously generated sets of words. This advantageously enables the system to learn from current actions and enhance the accuracy of future predictions by associating sets of words with a current user action.

In a tenth possible implementation form of the apparatus according to the first aspect as such or to any of the preceding possible implementations forms of the apparatus according to the first aspect, the processor is configured to read sensory information from the sensor upon detection of the user action, identify one or more active applications and data items open within the applications on the apparatus, form context information from the read sensory information and the identified one or more active applications and open data items, translate the context information into words and combine the words into the set of words. The aspects of the disclosed embodiments detect not only what applications are open or active on a device, but also the data items within an application, such as a web page within a browser application, a map in a map application or an article in a news application. This enables detecting user activity and translating the user activity into associable concepts to predict specific context driven actions or applications.

In a eleventh possible implementation form of the apparatus according to the first aspect as such or to any of the preceding possible implementations forms of the apparatus according to the first aspect the processor is configured to process the set of words in a random index machine learning algorithm and produce a vector for each word in the set of words. This enables determining similarities, such as cosine similarities, between vectors in the random index matrix in order to identify actions corresponding to the set of words.

According to a second aspect of the present invention the above and further objects and advantages are obtained by a method for predicting a next user action on a mobile communication device. The method includes detecting a user action, detecting a time and a location of the user action, translating the user action and at least one of the time of the user action and the location of the user action into a set of words, calculating a semantic similarity between the set of words and at least one previously generated set of words, and determining one or more predicted actions of the user based on a closest semantic similarity between the set of words and the at least one previously generated set of words. Real world event data and actions are turned into a set of words from which vectors are formed to provide a sparse representation of the event data and actions. Newly formed event vectors are compared to previously stored event vectors to determine similarities vectors. The similar vectors are used as the basis for the predicted action or actions.

The method further comprises converting a word in the set of words into an index vector, and forming a union of index vectors and store the union of index vectors in a random index.

In a first possible implementation form of the method according to the second aspect, the method includes detecting a selection of a next user action, creating an action corresponding to the selected next user action, associating the created action with the set of words, and storing the created action and the set of words. The set of words can be stored as one of the previously generated sets of words. So it can be used for further predictions. The aspects of the disclosed embodiments allow the system to learn from actions taken after a prediction is provided. By detecting an action after a prediction is made, and storing the corresponding set of words with the previously generated sets of words, future predictions can be more accurate.

In a second possible implementation form of the method according to the second aspect as such or the first possible implementation form of the second aspect, the selected next user action is one of the one or more predicted actions or another action. After a prediction is provided, a next user action can be a selection of a predicted action or some other action. The accuracy of the prediction system of the disclosed embodiments is improved by learning from next actions after a prediction is made.

According to a third aspect of the present invention the above and further objects and advantages are obtained by a computer program product including non-transitory computer program instructions that when executed by a processor cause the processor to perform the method according to the second aspect or any implementation form thereof.

According to a fourth aspect of the present invention the above and further objects and advantages are obtained by a method for predicting a next user action on a mobile communication device. The method includes detecting an event, reading sensor data
that is detected contemporaneously with the event and creating a set of words corresponding to the event and the sensor data. The set of words is translated into vectors which are joined together by a union between the vectors. A random index matrix that includes rows for each word is updated with the vector by vector summation. The vector that is formed is compared to other vectors in the random index matrix. Similarities are determined using a cosine similarity measure. A good prediction will have a high cosine similarity value. The words in a row corresponding to the high cosine similarity measure are sorted in a similarity order and actions corresponding to the words are presented on the user interface. When one of the presented actions is selected, the word is translated into an actual action in the operating system of the mobile device. The action taken is stored in conjunction with the set of words in the random index matrix. The aspects of the disclosed embodiments enable context information in the form of raw sensor data to be translated into sets of words that can then be processed to identify one or more user actions. Random index processing enables determination of similarities between the current set of words and previously generated sets of words. The similarities can be used as the basis for predicted actions. When an action is taken, this information is used to refine the set of possible predicted actions by associating the action with the current set of words and storing this new association in the previously generated sets of words. This new association can then be used for comparison purposes when a new set of words is formed.

The foregoing and other objects are achieved by the features of the independent claims. Further implementation forms are apparent from the dependent claims, the description and the figures.

These and other aspects, implementation forms, and advantages of the exemplary embodiments will become apparent from the embodiments described below considered in conjunction with the accompanying drawings. It is to be understood, however, that the description and drawings are designed solely for purposes of illustration and not as a definition of the limits of the disclosed invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

### BRIEF DESCRIPTION OF THE DRAWINGS

In the following detailed portion of the present disclosure, the invention will be explained in more detail with reference to the example embodiments shown in the drawings, in which:
Figure 1 illustrates a block diagram of a mobile computing device appropriate for practicing embodiments of the present invention;
Figure 2 illustrates block diagram of an operating system for a mobile computing device incorporating aspects of the disclosed embodiments;
Figure 3 illustrates a block diagram of user interface for a mobile computing device incorporating aspects of the disclosed embodiments;
Figure 4 illustrates a block diagram of an exemplary architecture for a random index system incorporating aspects of the disclosed embodiments;
Figure 5 is a flow chart illustrating an exemplary process incorporating aspects of the disclosed embodiments.

### DETAILED DESCRIPTION OF THE DISCLOSED EMBODIMENTS

The methods and apparatus disclosed herein provide a self-adapting context aware prediction system for mobile computing and communication devices (generally referred to herein as "mobile devices") that can detect the occurrence of an event, the context surrounding the event and present suggested actions to the user via the user interface of the mobile device in an intelligent manner. The mobile device captures data related to the event and transforms this event data into machine readable information. By comparing the current event data with previously generated event data, predictions of a next user action can be provided. The actions taken by the user in conjunction with the current context information can be stored with the previously generated event data to refine future predictions.

Raw sensor data can be translated into words. These sensor words are included in a bag or set of words that are included as parameters in the prediction process. The context aware prediction system of the disclosed embodiments makes associations between a current set of words and previously generated sets of words. The sets of words from the previously generated sets that are "close" or similar to the current set of words are identified. Actions associated with the identified sets of words are presented on the user interface of the mobile device as predictions. The predictions are typically ones that the user can take, or can be executed using the mobile device. When a predicted action is taken, this action is used to update the previously generated sets of words. In this manner, the system "self-adapts" to associate detected context information with detected user actions.

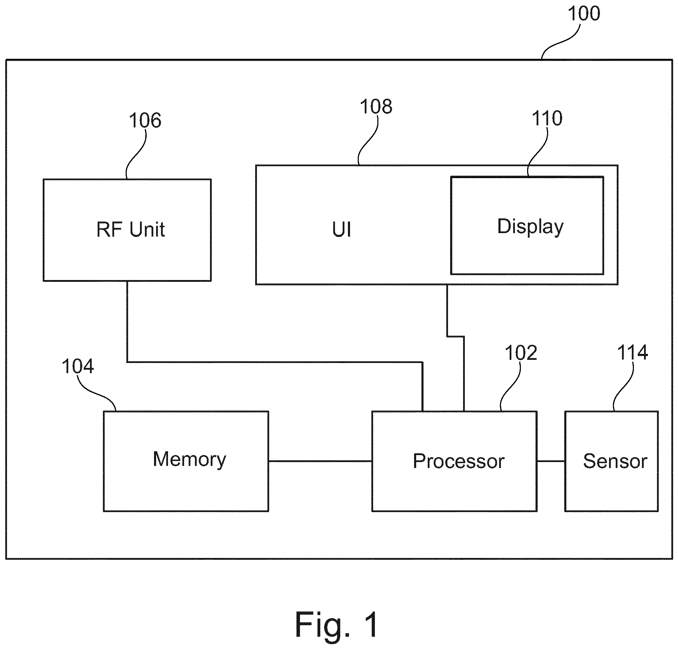

Figure 1 illustrates a block diagram of an apparatus 100 appropriate for implementing embodiments of the present disclosure. The illustrated apparatus 100 according to an embodiment of the present invention includes a processor 102 coupled to a computer memory 104, a radio frequency (RF) unit 106, a user interface (Ul) 108, a display 110, and sensors 114. The apparatus 100 is appropriate for use as a mobile computing or communication device, which may be or include any of various types of wireless communications user equipment including cell phones, smart phones and tablet devices. For the purposes of the description herein, the apparatus 100 will generally be referred to as a "mobile device."

The processor 102 may be a single processing device or may comprise a plurality of processing devices including special purpose devices, such as for example, digital signal processing (DSP) devices, microprocessors, specialized processing devices or general purpose computer processors. The processor 102 is configured to perform the context aware prediction process described herein.

The processor 102 is coupled 112 to a memory 104 which may be a combination of various types of volatile and non-volatile computer memory such as for example read only memory (ROM), random access memory (RAM), magnetic or optical disk, or other types of computer memory. The memory 104 stores computer program instructions that may be accessed and executed by the processor 102 to cause the processor to perform a variety of desirable computer implemented processes or methods.

The program instructions stored in memory 104 are organized as sets or groups of program instructions referred to in the industry with various terms such as programs, software components, software modules, units, etc., where each program may be of a recognized type such as an operating system, an application, a device driver, or other conventionally recognized type of software component. Also included in the memory 104 are program data and data files which are stored and processed by the computer program instructions.

The RF Unit 106 is coupled to the processor 102 and configured to transmit and receive RF signals based on digital data 112 exchanged with the processor 102. The RF Unit 106 is configured to transmit and receive radio signals that may conform to one or more of the wireless communication standards in use today, such as for example Long Term Evolution (LTE) and LTE-Advanced (LTE-A) developed by the third generation partnership project (3GPP), Wi-fi based on the institute of electrical and electronics engineers (IEEE) 802.11 standards, as well as many others. In certain embodiments, the RF Unit 106 includes receivers capable of receiving and interpreting messages sent from satellites in the global positioning system (GPS) and work together with information received from other transmitters to obtain positioning information pertaining to the location of the device 100.

The mobile device 100 includes one or more sensors 114 coupled to the processor 102 that can be configured to capture event data and provide context information that may be used by the processor 102 to enhance activity awareness. The aspects of the disclosed embodiments capture event data associated with the mobile device 100 to predict the next action. The event data can include, but is not limited to, a state of the mobile device 100, the time, the location, a movement status (stationary, walking, running, vertical, horizontal), in a car or other vehicle, temperature, a position of the mobile device, an orientation of the mobile device (vertical, horizontal), lighting conditions and a proximity of the mobile device 100 to other objects or locations. The sensors 114 may include for example, one or more of an accelerometer, a clock, light meter, positioning or location sensor, thermometer, as well as other sensors that may be used to detect user actions, a state of the mobile device, as well as events and activities occurring with or around the mobile device 100.

The UI 1 08 may include one or more user interface elements such as a touch screen, keypad, buttons, voice command processor, as well as other elements adapted for exchanging information with a user. The UI 108 may also include a display unit 110 configured to display a variety of information appropriate for a mobile computing device or mobile user equipment and may be implemented using any appropriate display type, which can include for example organic light emitting diodes (OLED), liquid crystal display (LCD), as well as less complex elements such as LEDs or indicator lamps. In certain embodiments the display unit 110 incorporates a touch or near touch screen for receiving information from the user of the mobile device 100. The mobile device 100 described above and illustrated in Figure 1 is appropriate for implementing any of the apparatus and methods disclosed herein. Especially may the processor 102 be configured to perform the methods described in the foregoing and the following.

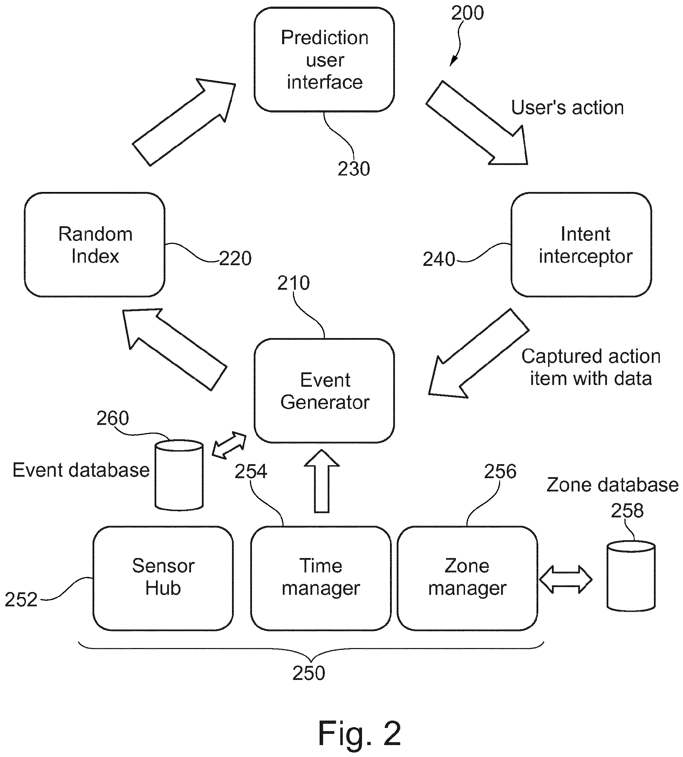

Figure 2 illustrates a block diagram representation of a context aware prediction system 200 incorporating aspects of the present invention. As shown in Figure 2, the context aware prediction system 200 includes an event generator 210, a random index system 220, a prediction user interface 230 and an intent interceptor 240. In alternate embodiments, the context aware prediction system 200 can include such other components and devices that are suitable to enable the mobile device 100 to detect at least event and context data and predict a next action of the user based on at least the event and context data.

The context aware prediction system 200 is generally configured to be included with or part of the mobile device 100. For example, in one embodiment, the context aware prediction system 200 is part of the operating system of the mobile device 100. Unlike other systems where personal data needs to be transferred from the device to a server or the cloud, the aspects of the disclosed embodiments do not require any such data transfer. Personal user content and user data security is maintained locally, providing a more robust secure system.

The aspects of the disclosed embodiments are configured to detect event data and actions associated with the mobile device 100, and any context data associated therewith. Generally, the event data will comprise a user action and can include or be associated with at least one or more of a time and location of the user action. In alternate embodiments, the event data and actions can comprise any one of a number of multiple parameters, including for example, the state of the mobile device, time, location, movement and environmental conditions. Further examples of the type of data and parameters are illustrated in Table I, below.

The user action can comprise any one of a number of events or activities, such as a physical activity or the user interaction with the mobile device 100. For example, the user action may be one of walking or running. Alternatively, the user action could be the use of an application on the mobile device 100.

In one embodiment, the detected user action is used in conjunction with one or more of a time of the user action and a location of the mobile device 100 when the user action is detected to form the context information. It will be understood that the context information can comprise any one of a number of parameters that can be used to identify a current event and user action and predict a next user action.

The event generator 210 is configured to receive the event data and actions, or context information and combine or form such data and information into words.

In one embodiment, the context information, or sensor data, is translated from one or more data sources 250. In the example of Figure 2, the data sources 250 that are used to provide or detect the user action and the context information include a sensor hub 252, a time manager 254 and a location or zone manager 256. The sensor hub 252 can comprise one or more of the sensors 114 illustrated in Figure 1. In alternate embodiments, the data sources 250 that are used to provide the context information can be any suitable sources or sensors that describe or provide event data that can be captured contemporaneously with a user action and a state of the mobile device 100. Although the description herein is generally described with respect to a user "action", it will be understood that such action can include or comprise more than one action.

In one embodiment, the sensor hub 252 is configured to detect a user action and generate data which can be used to identify the user action. For example, the sensor hub 252 can detect whether the user of the mobile device 100 is moving, such as by walking or running. Suitable positioning and location sensors can be used to detect motion, the type of motion as well as a location of the mobile device 100. For example, position and location sensors in the sensor hub 252 can be used to detect whether the mobile device 100 is moving, and if it is moving, whether it is moving towards or away from a particular location.

The sensor hub 252 can also be configured to detect a state of the mobile device 100 when the user action occurs. For example, the sensor hub 252 can be configured to detect whether an application is active on the mobile device 100, as well as the particular type of activity taking place with the application. In one embodiment, the sensor hub 252 might detect that an Internet browser of the mobile device 100 is open or active. The sensor hub 252 can also be configured to detect a particular web site or web page that is being viewed within the browser. The aspects of the disclosed embodiments are configured to not only identify open applications at the time of a user action, but also the open documents or data items inside the open applications. This can be advantageously used to provide a more refined and specific prediction.

In one embodiment, the data sources 250 can also include a time manager 254. The time manager 254 generally comprises a suitable time keeping device, such as a clock, which can be used to detect one or more of a date and time of a user action with or on the mobile device 100.

The data sources can also include a zone manager 256. The zone manager 256 is generally configured to detect a location of the mobile device 100 when a user action is detected. In one embodiment, the zone manager 256 can include a GPS device as well as a mapping system that can provide detailed location data. In an alternate embodiment, the zone manager 256 can include any suitable location services device or application.

The event generator 210 is configured to translate one or more of the sensor data from the sensor hub 252, the time data from the time manager 254 and the location data from the zone manger 256, into a set of words, also referred to herein as a "bag of words" or the "context information set of words." The "words" representing the sensor data form the parameters that will be used to predict the user action by comparing the current set of words to a previously generated set of words.

For example, when a user action with the mobile device 100 is detected, the sensor hub 252 reads the sensory information from the sensors 114 of the mobile device 100. This can include detecting the user action such as movement, the position or location of the mobile device 100 and applications that are open on the mobile device 100. The event generator 210 takes the data from the data sources 250 and translates the data to a concept that can be described by one or more words. The words are combined or form the set of words.

For example, if the event and context data is indicative of walking, the event generator 210 will translate the event and contact data into the equivalent of the word "WALKING." The time manager 254 can provide time and calendar data indicating that the detected action of WALKING occurred on a Tuesday at noon. In one embodiment, a specific date can also be provided. Also, the zone manager 256 can provide location data indicating that the detected action of WALKING occurred near the train station. When the relevant actions and data are translated into words, this can result in this example, with the set of words "WALKING, TUESDAY, NOON, TRAIN STATION." This set of words represents the current action and context information associated with the detected event.

The set of words is then transmitted to the random index system 220, which is configured to predict a next user action based on this set of words, also referred to as the current set of words. In one embodiment, the random index system 220 is configured to compare the current set of words to one or more previously generated sets of words to find the same or similar sets of words. The previously generated sets of words generally describe or are associated with events or actions that occurred in the past. In this manner, similar actions, based on the word sets, can be identified. Thus, if the current set of words correspond to WALKING, TUESDAY, NOON, TRAIN STATION, and there is a similar previously generated set of words, the actions associated with the previously generated set of words can be used in the predictions. In one embodiment, the previously generated sets of words and associated user actions can be stored in a memory, such as the event database 260.

The random index system 220 is configured to calculate a similarity, such as for example a semantic similarity, between the current set of words and the previously generated sets of words. In one embodiment, in order to calculate a similarity between the different sets of words, the set of words are translated into vectors, which are then joined together by a union between the vectors. A random index, such as a random index matrix for example, is used to store the vectors, and the rows of the random index, where each row represents a word, is updated with a vector by vector summation.

The vector that is formed corresponding to the current set of words is used for predicting a user action by identifying similar vectors in the random index. In one embodiment, the closeness or similarity can be calculated using, for example, one or more of a cosine distance or dot product calculation between the different vectors that are used to represent the current set of words and the previously generated sets of words. When the similarity is determined using a cosine similarity measure between vectors, the vectors from the random index that can be used for good predictions will have a high cosine similarity measure.

The aspects of the disclosed embodiments translate the raw sensor data from the data sources 250 into words. In one embodiment, the words in the sets of words described herein are generally in the form of a machine-understandable language. One example of such a machine-understandable language is the W3C URI format. Table 1 below illustrates a set of words as W3C notation. Table 1 also illustrates different examples of the types of sensor data, or parameters that are used to form the set of words.

**Table 1**

| |
|---|
| flat://on |
| utc://2013-08-20T 12:23:44 |
| gps://60.1954075/24.9484521 |
| proximity://NEAR |
| timezone://EET |
| lighting://LIGHT |
| timeOfDay://AFTERNOON |
| orientation://FACE UP |
| motion://STILL |
| wifiNetwork://ssid/AndroidAPks |
| wifiNetwork://ssid/HWFBCPE |
| wifiNetwork://ssid/NTPC02 |
| address://Plkneentie 14, 00510 Helsinki |
| appStarted://com.android.phone/null |
| wifiNetwork://ssid/AndroidAP |
| timestamp://2013-08-20T15:23:44 |
| wifiNetwork://ssid/E17-19 |
| dayOfWeek://TUESDAY |
| wifiNelwork://ssid/Vallila Interior Visitor |
| wifiNetwork://ssid/sipulinet |
| month://August |
| location://zone1 |
| wifiNetwork://ssid/lmkn4 |
| wifiNetwork://ssid/Mobile Pirates |
| wiri://connected/AndroidAPks |
| wifiNetwork://ssid/matetuuba |
| stability://UNSTABLE |
| appNavigated://com.android.phone/com.android.phone.InCallScreen |
| charger://connected |
| wifiNetwork://ssid/wlanaccessv2.0 |
| wifiNetwork://ssid/everest |
| network://Saunalahti |

The aspects of the disclosed embodiments code a transition matrix of the current set of words. This forms a sequential sparse transition matrix of groups of words. By comparing the current set of words to the previously generated sets of words, a prediction can be made as to the next set of words, or user action.

In one embodiment, each word that occurs in the set of words, such as that shown in Table 1 above, is converted by the random index prediction system 220 into an index vector. An index vector is a sparse vector that is randomly generated with multiple negative and positive small values. In the exemplary embodiment, the initial values are -1 and +1 (i.e. 10 pieces of -1s and 10 pieces of +1s distributed in random indices of the 10000 storage location length vector). The aspects of the disclosed embodiments use 10 negative and 10 positive values in random indexes between 0 and 9999. The index vector that is generated is a randomly generated sparse hash for a word.

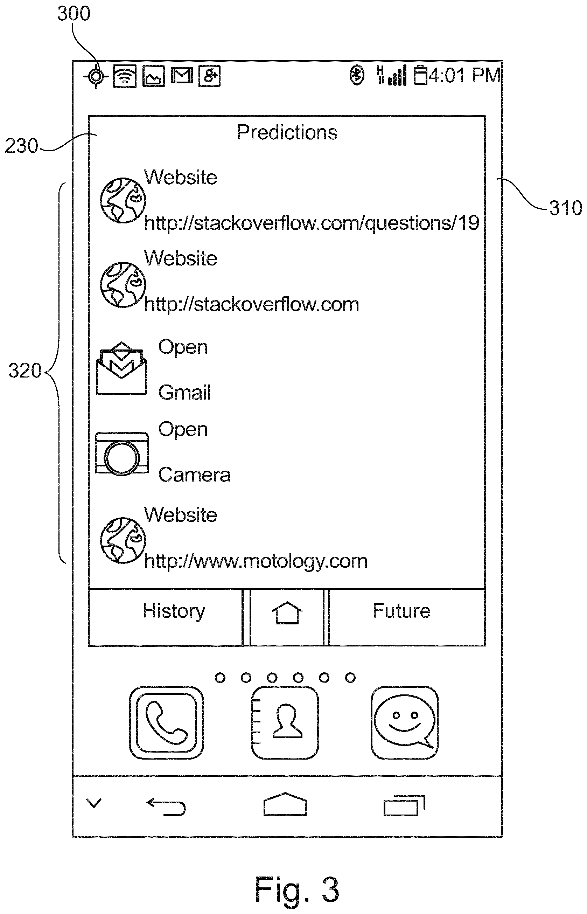

The random index system 220 is configured to be agnostic to what it describes. Thus, the format of the incoming words, or the current set of words, is not material. The W3C format described herein is useful because it enables the use of labels in the prediction phase. This allows for recognition of the prediction as a uniform resource locator ("URL") or some other "system word" 320, as is illustrated in Figure 3, for example. After each word in the current set of words is converted into an index vector, the words are joined together by a union between the index vectors. There are no duplicate words in the set of words because the set of words is a set of strings. The union of index vectors is a sparse vector, also referred to herein as the sparse representation of the event, which also has 10000 storage locations between 0 and 9999. The sparse vector is stored in the random index, where each rows represents a word and the columns are the 10000 dimensions. This union of index vectors is also referred to as a "context vector" referring to The Word-Space Model" dissertation by Magnus Sahlgren.

The newly generated context vector that was constructed from the current event, as described by the set of words, is then added to every word's row in the Random Index. These context vectors will predict the word that is identified by the row. In other words, if the conditions that result in the context vector similar to that row do exist, the conclusion is that the word in that row is likely to be involved.

The words in the rows corresponding to the vectors with high cosine similarity measure are sorted in similarity order. Similar results will receive up to 1.0 and not similar results will receive a 0. Good predictions will be based on a high cosine similarity. If the vector is dissimilar (=inverse) to the vector in the Random Index, then the result will be -1. The results along with the words corresponding to the result are added into ordered set of pairs where the ordering is done with the result as a key so that the bigger value wins lower value. This is then returned and is the resulting set of words. In one embodiment, the sensor words (e.g. charger://connected motion://STILL and so on) are filtered out from the results and only actionable words such as URLs, contacts, or launching an application will be included.

The mobile device 100 will then present an action, or prediction, for one or more of the identified similar vectors in a human readable list. When a prediction is selected, the word is translated into an actual action in the operating system of the mobile device. The action taken can be recorded in association with the formed vector in the random index. During a next prediction process, this recorded vector and action, also referred to as the previously generated sets of word, can be used when determining vector similarity.

In one embodiment, a time window is used in the addition of the context vectors. In the exemplary embodiment, a time window of three is used. In alternate embodiments, any suitably sized time window can be used, other than including three. This time window includes the current word, the previous word and the next word. The context vector of the previous word and the context word of the next word are added to the context vector of the current word in the Random Index. This will join the subsequent events together. The time window can be enlarged to reach farther back in time or further forward in the future.

Table 2 below illustrates an example of context vectors in a Random Index incorporating aspects of the disclosed embodiments. It is noted that in the Random Index of Table 2, the example vectors are divided along multiple lines because they are long. Table 2 also provides examples of the different types of event data or parameters that can be used in the prediction system of the disclosed embodiments.

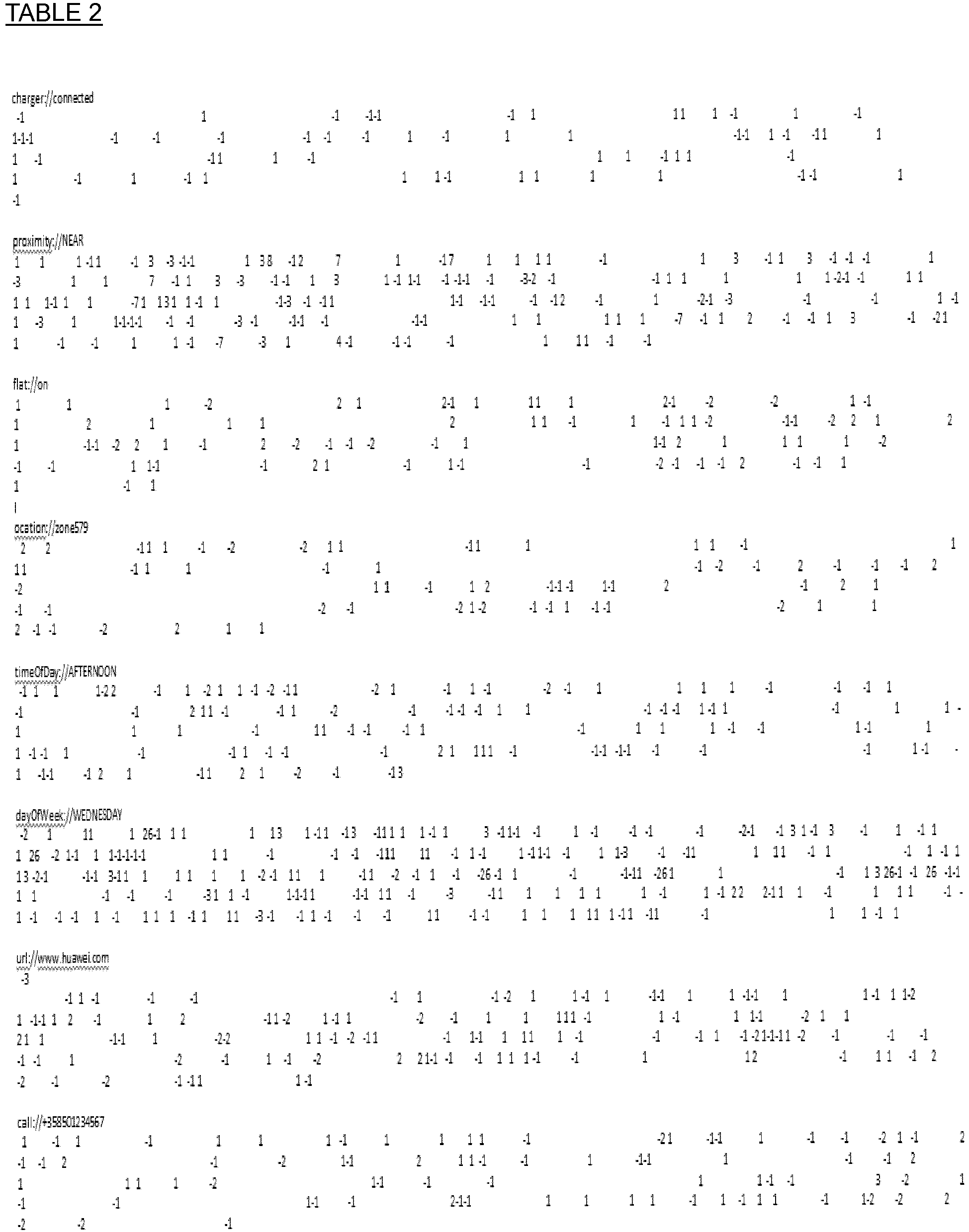

The aspects of the disclosed embodiments rely on past or previous actions and data to provide the next predicted action. The transitions described herein are encoded in a one way, directional manner.

In one embodiment, a delay line can be used to encode the past in the Context Vectors. A delay line generally comprises a decay series of the previous event's context vectors. This is a very simple way to form the history with a flat Random Index so that the strongest relation is with the item that occurred more recently, and a less strong relation is an event that occurred further in the past or longer ago. The delay line is constructed by adding the previous Context Vector to the current Context Vector and dividing it by a decay factor. This reduces the strength of previous events, similar to pressing down the sustain pedal in a piano. While the previous events continue to "ring", new events appear stronger.

Table 3 below illustrates an exemplary delay line computation.

**TABLE 3**

| Event vector |
|---|
| 000000100010010000000011000000001010000000000011001001 |

| Previous event vector |
|---|
| 001000000000000000000000001000001010000000000000001000 |

| Previous event vector divided by decay-factor (e.g. 2.0) |
|---|
| 00 0.5 00000000000000000000000 0.5 00000 0.5 0 0.5 000000000000000 0. 5 000 |

| The event vector combined to decayed previous event vector |
|---|
| 001000100010010000000011001000001010000000000011001001 |
| U |
| 001000000000000000000000001000001010000000000000001000/2 |
| = |
| 001.50000.50000.5001.5000000001.51.5001.5000001.501.5000000000001100 |

In one embodiment, this random index is saved or backed-up on the memory 104 of the mobile device 100, such as a flash memory for example. In the case of a restart, the random index is loaded from the memory 104 and the system 200 is back online for accumulating more data and performing predictions. As noted above, personal user content and user data security is maintained locally.

The random index system 220 is configured to provide predictions that will be presented on the user interface 108 of the mobile device 100, shown in Figure 2 as the prediction user interface 230. Figure 3 is an exemplary illustration of a prediction user interface 230 as it might be presented on the display 310 of an exemplary mobile device 300, similar to the mobile device 100 described with respect to Figure 1. In this example, the "predictions" 320 are labeled and presented on the display 310 are in the form of user selectable actions or functions. In the example of Figure 3, the predictions are in the form of "icons", referred to herein as the "prediction icons 320." It will be understood that the predictions can be presented on the user interface 230 in any suitable manner that allows a user to make, or not make, a selection. When the user "clicks" on any one of the prediction icons 320, the function or action associated with the prediction icon 320 will be activated in a manner as is generally understood and the chosen action or function is recorded together with sensor readings.

In one embodiment, the predictions 320 shown in Figure 3 are in the form of a scrollable list, where multiple predictions are presented at any one time. In alternate embodiments, any suitable number of predictions 320 can be presented. The mobile device 300 and display 310 of Figure 3 are merely exemplary, and it will be understood that the prediction user interface 230 can comprise any suitable form adaptable to a particular display 110 of a mobile device 100.

The nearest match(es) determined by the random index system 220 forms the prediction item(s) 320 that will be presented on the prediction user interface 230. For example, if the detected user action and context information is that of the user traveling on a bus, a bus route application might be predicted since the bus route application has been used before in a similar context. As another example, if the detected user action and corresponding context information is that of a user jogging, the predictions 320 can comprise one or more of a heart rate monitor application and a map application. These applications will predicted as next user actions because these applications have been used before in a similar context.

As a further example, the detected user action and context information is that of messaging via a social media application such as Facebook™. In this instance, a social media application of the mobile device 100 is proposed as a next predicted action. Here again, the social media application is predicted because the system 200 has previously learned this action in association with the same or similar context information.

The aspects of the disclosed embodiments enable a user to select one or more of the predictions 320 presented on the prediction user interface 230. Alternatively, the user of the mobile device 100 can take or activate an action that is not presented on the prediction user interface. The user action, whether it is one of the predictions 320 proposed by the random index system 200 or another action taken by the user, is detected by the Intent Interceptor 240. Data corresponding to the detected action taken is then sent to the event generator 210, where the detected action data is stored in association with the current set of words. The current set of words and the associated action can be stored in the event database 260, for example, to become part of the previously generated sets of words. This allows the prediction system 200 to "learn" from the current context information, and selection of a prediction 320, in order to provide more closely associated or relevant predicted actions in the future.

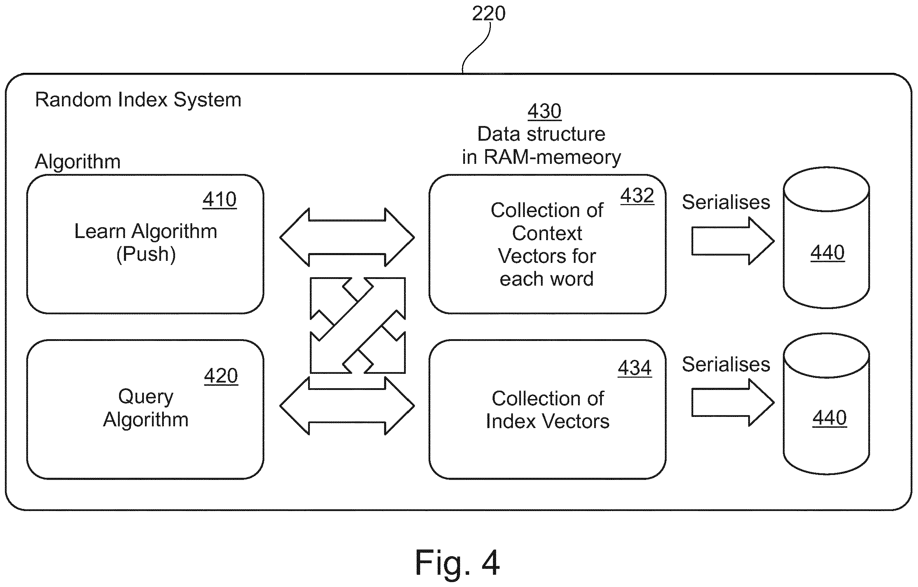

Figure 4 illustrates a high level architecture of the random index system 220 of Figure 2. In this example, the functioning of the random index system 220 is divided into two parts, a learning part 410 and a query part 420. The learning part 410 learns from new chains of events or occurrences. For example, the learning part 410 determines the current context information and user action. This data is then stored in the data structure 430. The data structure 430 includes the collection 432 of context vectors for each word and the collection 434 of index vectors. In one embodiment, the data stored in the data structure 430 can be serialized to the file system 440 of the mobile device 100. The collection 434 of index vectors is also written to the file system 440 for future use in encoding the words into the sparse representations.

In building the sparse vectors, which is the union of index vectors, the collection 434 of index vectors uses the same representations for the same events that have happened in the past. In this manner, the storage capabilities of the mobile device 100 are not exceeded. Thus, while each word has a sparse representation or index vector that is unique and random, the same sparse representation is always used for the same word in future occurrences.

The query portion 420 of the random index system uses the collection 432 of context vectors for each word and the collection 434 of index vectors. A bag or set of words represents the current context information and is encoded into the sparse representation by combining the index vector representations of the individual words found in the collection 434 of index vectors. The sparse representation or context vector is then compared to each vector in the collection 432 of context vectors, using for example a cosine similarity measure.

Each word has a row in the random index and the vector for the row is the sparse representation of the causations that occurred in the past. Causations in the sparse vector of that row predict the word of that row. For example, the word may be url://http://www.google.com and the context information that would lead to the prediction of this URL might be found from the current context representation as being similar to that row in the random index.

The aspects of the disclosed embodiments provide a measuring system where causation similarities are measured (what followed what) from what occurred in the past, and predictions are made from it. The more parameters in the context information currently occurring matches, the more likely is that the prediction will be a good one. The prediction system 200 of the disclosed embodiments predicts actions that have occurred in the past because the system knows what has occurred in the past. The system of the disclosed embodiments is configured to work locally inside the mobile device 100, and the predictions are only based on what the mobile device 100 has learned from the user of the mobile device by encoding the causations, multiple co-occurring contexts (represented by sparse representations of bag of words) into a high dimensional space.

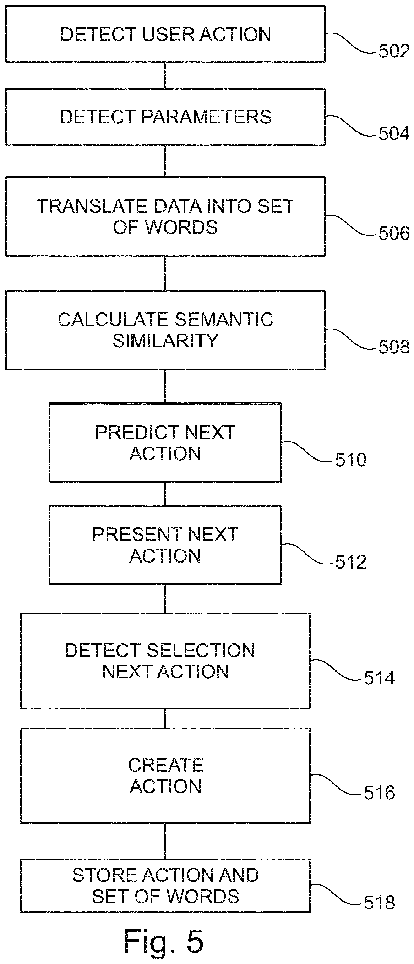

Figure 5 is a flow chart illustrating one embodiment of a process incorporating aspects of the disclosed embodiments, which can be performed by an apparatus (e.g. by a processor of the apparatus). In this example, an event or user action is detected 502. Parameters, such as for example one or more of a time and a location of the user action are detected 504. Other exemplary parameters are illustrated in Tables 1 and 2, for example. The user action and detected parameters, also referred to as sensor data, are translated 506 into a set of words, also referred to as a bag of words. A semantic similarity is calculated 508 between the set of words and at least one previously generated set of words. One or more next actions are predicted 510 based on similar sets of words. In one embodiment, the one or more predicted actions can be presented 512 on the display 110 of the mobile device 100.

In one embodiment, the mobile device 100 is configured to detect 514 a selection of one of the predicted actions, or another action, as a next user action. In one embodiment, the next user action can be an action other than one of the predicted actions. This allows the system to learn from any action taken by the user after a predicted action is presented. The detected selection can be translated into an action, such as an Android intent, which will perform the action or activity in question. Such actions can include for example, opening a document, launching a web page, activating a mode of the mobile device, making a phone call to a predicted phone number, or sending SMS to a predicted person.

In one embodiment, an action is created 516 based on the detected selection. The created action, in the form of a set of words, is stored 518 together with the current set of words in the previously generated sets of words. This allows the system to learn from prior actions and alter future predictions.

As an example, the mobile device 100 is used to read the news or articles from a website at approximately 09.30 AM while the user is on a bus. The determination that the user is on the bus can be based on detecting a first location at or near a bus stop, and subsequently detecting movement that corresponds to traveling on the bus, i.e. not in a static location. The raw sensor data relating to the news site active on the mobile device, such as a web page, the time, location and movement are converted into words. The words are then processed by the processor as described herein to form the basis for the prediction of the next user action. Thus, when it is next detected that the user is traveling on a bus, at approximately 09.30 AM, a predicted action that can be presented on the mobile device 100 can be that of the news site, or other similar activity. If the user proceeds to access the news site, the data can be updated to reflect any difference between the current set of words and the previously generated sets of words.

With reference to the example, above, the aspects of the disclosed embodiments can provide a link not only to the exact web page that occurred in the past, or that the user visited in the past, but also to the root of the web page. For example, if a user was looking at an article on a website at a particular point in time, such as 09.30 AM on a Tuesday, providing a prediction for the same article on another day may not be a useful prediction, as the article may not be relevant or user may not want to read the same article again. However, by providing a link to the root of the article, the user can be provided with a prediction to the main site. The user could then select the news or article relevant for that specific day.

The aspects of the disclosed embodiments provide a prediction of a next user action on a mobile device. The user activity and other parameters related to the user activity are captured and translated into associable concepts, such as words. The words are formed into a bag of words, or data sets. The random index system of the disclosed embodiments makes associations between the current contextual information (the bag of words) and events that happened in the past, or previously generated data sets. By comparing current contextual information to previously generated data sets similarities can be identified and a next action predicted.

The user activity and parameters are described in machine readable language and associations are identified. The words are translated back to actual actions in the form of predictions that are executable by the system. When the user acts on one of the predictions, the choice creates an action. This action is learned by the random index system of the disclosed embodiments and associated with a bag of words that is stored. Thus, when a user acts on a prediction, this causes a change in the random index matrix, which will alter the future predictions.

Thus, while there have been shown, described and pointed out, fundamental novel features of the invention as applied to the exemplary embodiments thereof, it will be understood that various omissions and substitutions and changes in the form and details of devices and methods illustrated, and in their operation, may be made by those skilled in the art without departing from the spirit and scope of the invention. Moreover, it is expressly intended that all combinations of those elements, which perform substantially the same function in substantially the same way to achieve the same results, are within the scope of the invention. Moreover, it should be recognized that structures and/or elements shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An apparatus (100) for predicting a next user action, the apparatus comprising:
a processor (102);
wherein the processor (102) is configured to:
detect a user action;
detect a time and a location of the user action;
translate the user action and at least one of the time of the user action and the location of the user action into a set of words;
calculate a semantic similarity between the set of words and at least one previously generated set of words; and
determine one or more predicted actions of the user based on a closest semantic similarity between the set of words and the at least one previously generated set of words;
wherein the processor (102) is further configured to convert a word in the set of words into an index vector, and form a union of index vectors and store the union of index vectors in a random index.

2. The apparatus (100) of claim 1, comprising a sensor (114) configured to detect the user action.

3. The apparatus (100) of claim 2, wherein the processor (102) is configured to translate sensor readings from the sensor (114) into words using an activity recognition algorithm.

4. The apparatus (100) of any one of claims 1-3, wherein the processor (102) is configured to process the set of words using a prediction algorithm.

5. The apparatus (100) of any one of claims 1-4, wherein the prediction algorithm is a random index algorithm.

6. The apparatus (100) of any one of claims 1-5, wherein the processor (102) is configured to translate the set of words into a machine readable format.

7. The apparatus (100) of any one of claims 1-6, wherein the processor (102) is configured to translate the set of words into a W3C Uniform Resource Identifier format.

8. The apparatus (100) of any one of claims 1-7, wherein the processor (102) is configured to:
present the one or more predicted actions on a user interface (108) of the apparatus (100);
detect a selection of one of the one or more predicted actions; and
execute an action of the apparatus associated with the detected selection.

9. The apparatus (100) of claim 8, wherein the processor (102) is configured to translate the selected prediction into an intent that performs the selected prediction on the apparatus.

10. The apparatus (100) of claim 8 or 9, wherein the processor (102) is configured to:
generate an action based on the detection of the selection of the one or more predicted actions; and
store the action together with the set of words in the previously generated sets of words.

11. The apparatus (100) of any one of claims 1-9, wherein the processor (102) is configured to:
read sensory information from a sensor (114) upon detection of the user action;
identify open applications on the apparatus;
form context information from the read sensory information and the identified open applications; and
translate the context information into words and combine the words into a set of words.

12. A method (500) for predicting a next user action on a mobile communication device, the method comprising;
detecting (502) a user action;
detecting (504) a time and a location of the user action;
translating (506) the user action and at least one of the time of the user action and the location of the user action into a set of words;
calculating (508) a semantic similarity between the set of words and at least one previously generated set of words; and
determining (510) one or more predicted actions of the user based on a closest semantic similarity between the set of words and the at least one previously generated set of words;
wherein the method further comprises converting a word in the set of words into an index vector, and forming a union of index vectors and store the union of index vectors in a random index.

13. The method according to claim 12, the method further comprising:
detecting (514) a selection of one of the one or more predicted actions;
creating (516) an action corresponding to the selected one of the one or more predicted actions; and
storing (518) the created action and the set of words.

14. A computer program product including non-transitory computer program instructions that when executed by a processor cause the processor to perform the method according to claim 12 or 13.

## Patentansprüche

1. Vorrichtung (100) zum Vorhersagen einer nächsten Benutzeraktion, wobei die Vorrichtung umfasst:
einen Prozessor (102);
wobei der Prozessor (102) ausgelegt ist zum:
Detektieren einer Benutzeraktion;
Detektieren eines Zeitpunkts und eines Orts der Benutzeraktion;
Übersetzen der Benutzeraktion und wenigstens eines aus dem Zeitpunkt der Benutzeraktion und dem Ort der Benutzeraktion in einen Satz von Wörtern;
Berechnen einer semantischen Ähnlichkeit zwischen dem Satz von Wörtern und wenigstens einem zuvor erzeugten Satz von Wörtern; und
Ermitteln einer oder mehrerer vorhergesagter Aktionen des Benutzers basierend auf einer nächsten semantischen Ähnlichkeit zwischen dem Satz von Wörtern und dem wenigstens einen zuvor erzeugten Satz von Wörtern;
wobei der Prozessor (102) ferner ausgelegt ist zum Konvertieren eines Worts im Satz von Wörtern in einen Indexvektor und Ausbilden einer Vereinigungsmenge von Indexvektoren und Speichern der Vereinigungsmenge von Indexvektoren in einem Zufallsindex.

2. Vorrichtung (100) nach Anspruch 1, mit einem Sensor (114), der ausgelegt ist zum Detektieren der Benutzeraktion.

3. Vorrichtung (100) nach Anspruch 2, wobei der Prozessor (102) ausgelegt ist zum Übersetzen von Sensormessergebnissen aus dem Sensor (114) in Wörter unter Verwendung eines Aktivitätserkennungsalgorithmus.

4. Vorrichtung (100) nach einem der Ansprüche 1-3, wobei der Prozessor (102) ausgelegt ist zum Verarbeiten des Satzes von Wörtern unter Verwendung eines Vorhersagealgorithmus.

5. Vorrichtung (100) nach einem der Ansprüche 1-4, wobei der Vorhersagealgorithmus ein Zufallsindexalgorithmus ist.

6. Vorrichtung (100) nach einem der Ansprüche 1-5, wobei der Prozessor (102) ausgelegt ist zum Übersetzen des Satzes von Wörtern in ein maschinell lesbares Format.

7. Vorrichtung (100) nach einem der Ansprüche 1-6, wobei der Prozessor (102) ausgelegt ist zum Übersetzen des Satzes von Wörtern in ein W3C-Uniform-Resource-Identifier-Format.

8. Vorrichtung (100) nach einem der Ansprüche 1-7, wobei der Prozessor (102) ausgelegt ist zum:
Präsentieren der einen oder mehreren vorhergesagten Aktionen auf einer Benutzerschnittstelle (108) der Vorrichtung (100);
Detektieren einer Auswahl aus einer der einen oder mehreren vorhergesagten Aktionen; und
Ausführen einer Aktion der Vorrichtung, die der detektierten Auswahl zugeordnet ist.

9. Vorrichtung (100) nach Anspruch 8, wobei der Prozessor (102) ausgelegt ist zum Übersetzen der ausgewählten Vorhersage in einen Intent, der die auswählte Vorhersage auf der Vorrichtung durchführt.

10. Vorrichtung (100) nach einem der Ansprüche 8 oder 9, wobei der Prozessor (102) ausgelegt ist zum:
Erzeugen einer Aktion basierend auf der Detektion der Auswahl der einen oder mehreren vorhergesagten Aktionen; und
Speichern der Aktion zusammen mit dem Satz von Wörtern im zuvor erzeugten Satz von Wörtern.

11. Vorrichtung (100) nach einem der Ansprüche 1-9, wobei der Prozessor (102) ausgelegt ist zum:
Auslesen von sensorischen Informationen aus einem Sensor (114) bei Detektion der Benutzeraktion;
Identifizieren offener Anwendungen auf der Vorrichtung;
Bilden von Kontextinformationen aus den ausgelesenen sensorischen Informationen und den identifizierten offenen Anwendungen; und
Übersetzen der Kontextinformationen in Wörter und Kombinieren der Wörter zu einem Satz von Wörtern.

12. Verfahren (500) zum Vorhersagen einer nächsten Benutzeraktion auf einem mobilen Kommunikationsgerät, wobei das Verfahren umfasst:
Detektieren (502) einer Benutzeraktion;
Detektieren (504) eines Zeitpunkts und eines Orts der Benutzeraktion;
Übersetzen (506) der Benutzeraktion und wenigstens eines aus dem Zeitpunkt der Benutzeraktion und dem Ort der Benutzeraktion in einen Satz von Wörtern;
Berechnen (508) einer semantischen Ähnlichkeit zwischen dem Satz von Wörtern und wenigstens einem zuvor erzeugten Satz von Wörtern; und
Ermitteln (510) einer oder mehrerer vorhergesagter Aktionen des Benutzers basierend auf einer nächsten semantischen Ähnlichkeit zwischen dem Satz von Wörtern und dem wenigstens einen zuvor erzeugten Satz von Wörtern;
wobei das Verfahren ferner ein Konvertieren eines Worts im Satz von Wörtern in einen Indexvektor und ein Ausbilden einer Vereinigungsmenge von Indexvektoren und Speichern der Vereinigungsmenge von Indexvektoren in einem Zufallsindex umfasst.

13. Verfahren gemäß Anspruch 12, wobei das Verfahren ferner umfasst:
Detektieren (514) einer Auswahl aus einer aus der einen oder den mehreren vorhergesagten Aktionen;
Erzeugen (516) einer Aktion, die der ausgewählten aus der einen oder den mehreren vorhergesagten Aktionen entspricht; und
Speichern (518) der erzeugten Aktion und des Satzes von Wörtern.

14. Rechnerprogrammprodukt mit nichttransitorischen Rechnerprogrammbefehlen, die bei deren Ausführung durch einen Prozessor bewirken, dass der Prozessor das Verfahren gemäß Anspruch 12 oder 13 durchführt.

## Revendications

1. Appareil (100) pour prédire une action d'utilisateur suivante, cet appareil comprenant :
un processeur (102) ;
ce processeur (102) étant configuré de façon à :
détecter une action d'utilisateur ;
détecter une heure et un emplacement de cette action d'utilisateur ;
traduire cette action d'utilisateur et au moins soit l'heure de cette action d'utilisateur,
soit l'emplacement de cette action d'utilisateur en un ensemble de mots ;
calculer une similarité sémantique entre cet ensemble de mots et au moins un ensemble de mots généré antérieurement ; et à
déterminer une ou plusieurs actions prédites de l'utilisateur en se basant sur une similarité sémantique la plus étroite entre l'ensemble de mots et l'au moins un ensemble de mots généré antérieurement ;
le processeur (102) étant configuré en outre de façon à convertir un mot dans l'ensemble de mots en un vecteur d'indice, et à former une union de vecteurs d'indices et à stocker cette union de vecteurs d'indices dans un indice aléatoire.

2. Appareil (100) selon la revendication 1, comprenant un capteur (114) configuré de façon à détecter l'action de l'utilisateur.

3. Appareil (100) selon la revendication 2, dans lequel le processeur (102) est configuré de façon à traduire les lectures de capteur venant du capteur (114) en mots en utilisant un algorithme de reconnaissance d'activité.

4. Appareil (100) selon l'une quelconque des revendications 1 à 3, dans lequel le processeur (102) est configuré de façon à traiter l'ensemble de mots en utilisant un algorithme de prédiction.

5. Appareil (100) selon l'une quelconque des revendications 1 à 4, dans lequel l'algorithme de prédiction est un algorithme d'indice aléatoire.

6. Appareil (100) selon l'une quelconque des revendications 1 à 5, dans lequel le processeur (102) est configuré de façon à traduire l'ensemble de mots en un format lisible par une machine.

7. Appareil (100) selon l'une quelconque des revendications 1 à 6, dans lequel le processeur (102) est configuré de façon à traduire l'ensemble de mots en un format Uniform Resource Identifier W3C.

8. Appareil (100) selon l'une quelconque des revendications 1 à 7, dans lequel le processeur (102) est configuré de façon à :
présenter la ou les actions prédites sur une interface utilisateur (108) de l'appareil (100) ;
détecter une sélection d'une de la ou des actions prédites ; et à exécuter une action de l'appareil associée à la sélection détectée.

9. Appareil (100) selon la revendication 8, dans lequel le processeur (102) est configuré de façon à traduire la prédiction sélectionnée en une intention qui exécute la prédiction sélectionnée sur l'appareil.

10. Appareil (100) selon la revendication 8 ou 9, dans lequel le processeur (102) est configuré de façon à :
générer une action en se basant sur la détection de la sélection de la ou des actions prédites ; et à
stocker cette action avec l'ensemble de mots dans l'ensemble de mots généré antérieurement.

11. Appareil (100) selon l'une quelconque des revendications 1 à 9, dans lequel le processeur (102) est configuré de façon à :
lire des informations sensorielles venant d'un capteur (114) lors de la détection de l'action de l'utilisateur ;
identifier les applications ouvertes sur l'appareil ;
former des informations de contexte à partir des informations sensorielles et des applications ouvertes identifiées ; et à
traduire ces informations de contexte en mots et combiner ces mots en un ensemble de mots.

12. Procédé (500) pour prédire une action d'utilisateur suivante sur un dispositif de communication mobile, ce procédé comprenant :
la détection (502) d'une action d'utilisateur ;
la détection (504) d'une heure et d'un emplacement de cette action d'utilisateur ;
la traduction (506) de cette action d'utilisateur et d'au moins soit l'heure de cette action d'utilisateur, soit l'emplacement de cette action d'utilisateur en un ensemble de mots ;
le calcul (508) d'une similarité sémantique entre cet ensemble de mots et au moins un ensemble de mots généré antérieurement ; et
la détermination (510) d'une ou de plusieurs actions prédites de l'utilisateur en se basant sur une similarité sémantique la plus étroite entre l'ensemble de mots et l'au moins un ensemble de mots généré antérieurement ;
ce procédé comprenant en outre la conversion d'un mot dans l'ensemble de mots en un vecteur d'indice, et la formation d'une union de vecteurs d'indices et le stockage de cette union de vecteurs d'indices dans un indice aléatoire.

13. Procédé selon la revendication 12, ce procédé comprenant en outre :
la détection (514) d'une sélection de la ou des actions prédites ;
la création (516) d'une action correspondant à l'action sélectionnée de la ou des actions prédites ; et
le stockage (518) de l'action créée et de l'ensemble de mots.

14. Produit programme informatique comprenant des instructions de programme informatique non transitoires qui, lorsqu'elles sont exécutées par un processeur, font exécuter à ce processeur le procédé selon la revendication 12 ou 13.
